**Europäisches Patentamt**

**European Patent Office**

**Office européen des brevets**

(19)

(11) **EP 0 608 367 B1**

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(51) Int. Cl.$^6$: **B60T 8/00**, B60L 3/10, B60K 28/16, G01N 19/02

(21) Anmeldenummer: **92922681.9**

(22) Anmeldetag: **22.10.1992**

(86) Internationale Anmeldenummer: **PCT/DE92/00908**

(87) Internationale Veröffentlichungsnummer: **WO 93/08049 (29.04.1993 Gazette 1993/11)**

(54) **ANORDNUNG ZUR ERMITTLUNG EINES KRITISCHEN ANTRIEBSDREHMOMENTES AN EINEM KRAFTFAHRZEUG**

ARRANGEMENT FOR DETECTING A CRITICAL DRIVING TORQUE IN A MOTOR VEHICLE

DISPOSITIF DE DETECTION D'UN COUPLE D'ENTRAINEMENT CRITIQUE SUR UN VEHICULE AUTOMOBILE

(84) Benannte Vertragsstaaten:
**DE ES FR GB IT SE**

(30) Priorität: **22.10.1991 DE 4134831**

(43) Veröffentlichungstag der Anmeldung:
**03.08.1994 Patentblatt 1994/31**

(73) Patentinhaber: **FICHTEL & SACHS AG D-97424 Schweinfurt (DE)**

(72) Erfinder:
• **ADLER, Uwe**
  **D-8720 Schweinfurt (DE)**
• **DREXL, Hans-Jürgen**
  **D-8724 Schonungen (DE)**
• **LUTZ, Dieter**
  **D-8720 Schweinfurt (DE)**
• **NAGLER, Franz**
  **D-8729 Ottendorf (DE)**
• **OCHS, Martin**
  **D-8720 Schweinfurt (DE)**
• **SCHIEBOLD, Stefan**
  **D-8720 Schweinfurt (DE)**
• **SCHMIDT-BRÜCKEN, Hans-Joachim**
  **D-8712 Geldersheim (DE)**
• **THIELER, Wolfgang**
  **D-8728 Hassfurt (DE)**
• **WAGNER, Michael**
  **D-8721 Niederwerrn (DE)**
• **WESTENDORF, Holger**
  **D-8721 Hambach (DE)**
• **WYCHNANEK, Rainer**
  **D-8721 Madenhausen (DE)**

(74) Vertreter: **Meissner, Peter E., Dipl.-Ing. et al D-14199 Berlin (DE)**

(56) Entgegenhaltungen:
| | |
|---|---|
| EP-A- 0 227 003 | WO-A-89/10863 |
| WO-A-91/15378 | WO-A-91/15386 |
| DE-A- 3 531 653 | |

**EP 0 608 367 B1**

Beschreibung

Die Erfindung betrifft eine Anordnung zur Ermittlung einer ein kritisches Drehmoment im Bereich der Radhaftungsgrenze repräsentierenden Information für ein mehrere angetriebene Räder umfassendes Kraftfahrzeug.

Das Regelverhalten herkömmlicher Antiblockierregelsysteme (ABS) und Antriebsschlupfregelsysteme (ASR) ist für einen festgelegten Reibbeiwert zwischen Rad und Fahrbahn, zumeist den Reibbeiwert für eine griffige trockene Fahrbahn, ausgelegt. Dem Reibbeiwert entspricht ein von der jeweiligen Radlast abhängiges (kritisches) Antriebsdrehmoment, das mit einem gerade noch zulässigen Schlupf, d. h. ohne ein Durchdrehen des Antriebsrades noch auf die Fahrbahn übertragen werden kann. Bei einer Änderung des Reibbeiwertes, beispielsweise aufgrund nasser oder vereister Fahrbahn, kann dies zu einer Verschlechterung der Regeleigenschaften - bei ABS zum Beispiel zu einer Verlängerung des Bremsweges auf eisglatter Fahrbahn - führen. Eine Anpassung der Regeleigenschaften solcher Regelsysteme an den Zustand der momentan befahrenen Fahrbahn ist deshalb wünschenswert.

Aus der DE 38 14 956 A1 ist ein Regelsystem für ABS- und ASR-Systeme bekannt, bei dem aus dem übertragenen Antriebsdrehmoment oder Bremsmoment und der Radgeschwindigkeit eines Antriebsrades der augenblicklich vorhandene Reibbeiwert und der Anstieg der Schlupfkurve abgeschätzt werden. Eine exakte Ermittlung des Reibbeiwertes findet dabei also nicht statt.

Es ist Aufgabe der Erfindung, eine Anordnung zu schaffen, die während des Fahrbetriebes des Kraftfahrzeuges die genaue Ermittlung einer ein kritisches Antriebsmoment im Bereich der Radhaftungsgrenze repräsentierenden quantifizierten Information ermöglicht. Der dazu erforderliche vorrichtungsmäßige Aufwand soll möglichst gering bleiben.

Diese Aufgabe wird erfindungsgemäß bei einer gattungsgemäßen Anordnung durch die kennzeichnenden Merkmale des Patentanspruches 1 gelöst. Vorteilhafte Weiterbildungen der Erfindung sind in den Unteransprüchen 2 bis 13 angegeben.

Die Erfindung geht von der Überlegung aus, daß bereits bei einer kurzzeitigen, also vorübergehenden Erhöhung des Antriebsdrehmomentes bei lediglich einer Teilzahl der angetriebenen Räder bis an die Haftgrenze dieser Räder heran die Größe des kritischen Antriebsdrehmomentes leicht bestimmt werden kann, da das Kraftfahrzeug mit einzeln angesteuerten elektrischen Antriebsmotoren ausgestattet ist. Aufgrund der erfaßten dem jeweiligen Elektromotor zugeführten Leistung und der erfaßten aktuellen Raddrehzahl, die mit derjenigen des Elektromotors übereinstimmt oder bei Zwischenschaltung eines Getriebes in einem vorgegebenen Verhältnis zur Drehzahl des Elektromotors steht, ist das jeweilige Antriebsdrehmoment von einer Rechenschaltung errechenbar. Die Erfindung sieht vor, daß die Erhöhung des Antriebsdrehmomentes nur kurzzeitig erfolgt, damit das Fahrzeug für den Fahrer keinerlei Änderungen im Fahrverhalten zeigt. Das bedeutet, daß die Drehmomenterhöhung so dosiert werden muß, daß aufgrund der Massenträgheit des Fahrzeugs nach außen praktisch keine merkbaren Reaktionen hervorgerufen werden. Dies ist beispielsweise möglich, wenn die Dauer der Drehmomenterhöhung auf den Zeitbedarf für den Bruchteil einer Radumdrehung, vorzugsweise auf höchstens die Hälfte, insbesondere höchstens ein Zehntel begrenzt wird. Die Rechenschaltung, die die Prozedur zur Ermittlung des kritischen Antriebsdrehmomentes durchführt, vergleicht während der kurzzeitigen Antriebsdrehmomenterhöhung die Raddrehzahlen der Antriebsräder und ermittelt eine relative, d. h. auf die Raddrehzahl bezogene Drehzahldifferenz, die der Schlupfdifferenz der beiden miteinander verglichenen Räder entspricht. Unter der normalerweise gegebenen Voraussetzung, daß das Antriebsrad mit dem kleineren Antriebsdrehmoment noch keinen wesentlichen Schlupf aufweist, ist die relative Drehzahldifferenz unmittelbar repräsentativ für den absoluten Schlupf des Antriebsrades mit dem kurzzeitig erhöhten Antriebsdrehmoment. Solange die ermittelte relative Drehzahldifferenz unterhalb eines vorgegebenen kritischen Grenzwertes bleibt, der beispielsweise im Bereich von 10 bis 15 % festgelegt sein kann, liegt noch kein Durchdrehen des betreffenden Antriebsrades vor, so daß - gleichbleibende Reibungsverhältnisse vorausgesetzt - ein Antriebsmoment in der festgestellten Größenordnung problemlos im Fahrbetrieb ausgenutzt werden kann. Die von der Rechenschaltung veranlaßte Erhöhung des Antriebsdrehmomentes erfolgt um einen vorgegebenen Festbetrag oder um einen vorgegebenen Prozentsatz des aktuellen Antriebsdrehmomentes an dem jeweiligen Rad. Vorteilhaft ist beispielsweise eine Erhöhung um höchstens ein Viertel des aktuellen Antriebsdrehmomentes. Der vorgegebene Erhöhungsbetrag kann auch in Abhängigkeit von der Raddrehzahl festgelegt sein. Zumindest wenn bei der Erhöhung des Drehmomentes die gesetzte Schlupfgrenze noch nicht erreicht wurde, wird die Prozedur zur Ermittlung des kritischen Antriebsdrehmomentes im Zeitverlauf wiederholt. Es kann dann zunächst eine Information über die Höhe des noch unkritischen Antriebsdrehmomentes ausgegeben werden. Möglich ist aber auch eine sofortige Prozedurwiederholung, wobei dann aber zweckmässigerweise mit einem größeren Betrag der Drehmomenterhöhung gearbeitet wird, um sich der vorgegebenen Schlupfgrenze und damit dem kritischen Antriebsdrehmoment zu nähern.

Sobald eine Überschreitung der Schlupfgrenze anhand des ermittelten relativen Drehzahlunterschieds erkannt wird, versucht die Rechenschaltung den genauen Wert des kritischen Antriebsdrehmomentes festzustellen, indem ein iteratives Vorgehen angewandt wird, d. h. der Erhöhungsbetrag für das Antriebsdrehmoment wird kleiner gewählt als zuvor. Tritt diese Überschreitung beispielsweise bereits bei der ersten Drehmomenterhöhung auf, so kann der Erhöhungsbetrag beispielsweise halbiert werden. Wird dann bei dieser erneuten Drehmomenterhöhung immer noch eine Schlupfgrenzenüberschreitung festgestellt, erfolgt im nächsten Schritt eine noch geringere Erhöhung; im umgekehrten Fall wird ein zwischen den beiden letzten Beträgen liegender Wert gewählt. Auf diese Weise kann sich die Rechenschaltung in wenigen Schritten ausreichend genau an den tatsächlichen Wert des kritischen Antriebsdrehmomentes herantasten.

Das kritische Antriebsdrehmoment ist unter Berücksichtigung der Radlast auch ein Maß für den aktuellen Reibbeiwert zwischen dem dann schlupfenden Rad und der Fahrbahn. Die so gewonnene Information über den Reibbeiwert oder auch bereits der ermittelte Wert des kritischen Antriebsdrehmomentes kann zur Steuerung der Regeleigenschaften von ABS- und/oder ASR-Regelsystemen und/oder zur Information des Fahrers beispielsweise mittels einer Warneinrichtung oder eines den Fahrbahnzustand anzeigenden Displays benutzt werden.

Zweckmässigerweise erfolgt die Variation der Antriebsdrehmomente so, daß die Drehmomentsteuereinrichtung die Summe der Antriebsdrehmomente sämtlicher angetriebenen Räder des Kraftfahrzeuges während der Ermittlung des kritischen Antriebsdrehmomentes und/oder des Reibbeiwertes (im folgenden wird beides zusammenfassend meist als Reibbeiwertermittlung bezeichnet) auf einem vorgegebenen Wert hält. Die Drehmomentsteuereinrichtung ändert damit lediglich die Verteilung der Antriebsdrehnomente auf die angetriebenen Räder, so daß keine Komforteinbußen aufgrund der Drehmonentänderungen während der Reibbeiwertermittlung zu befürchten sind. Außerdem werden solche negativen Effekte aufgrund der bereits erwähnten Massenträgheit des Kraftfahrzeuges und der nur kurzzeitigen Drehmomenterhöhung weitestgehend "weggedämpft".

Da eine Variation der Antriebsdrehmomente zwischen Rädern derselben Antriebsachse unter Umständen zu bemerkbaren Giermomenten um die Hochachse des Kraftfahrzeuges führen könnten, variieren die Drehmomentsteuereinrichtungen vorzugsweise das Verhältnis der Summe der Antriebsdrehmomente der angetriebenen Räder einer Vorderachse des Kraftfahrzeuges zur Summe der Antriebsdrehmomente der angetriebenen Räder einer Hinterachse.

An und für sich genügt es, wenn für die Ermittlung der Reibbeiwertinformation jeweils das Antriebsdrehmoment ein und desselben Rades oder der Räder ein und derselben Antriebsachse erhöht und nachfolgend wieder erniedrigt wird. Um jedoch auch Unterschiede der kritischen Antriebsdrehmomente bzw. der Reibbeiwerte zwischen Vorderachse und Hinterachse und/oder linken und rechten Rädern des Kraftfahrzeuges erfassen zu können, erhöhen die Drehmomentsteuereinrichtungen zweckmässigerweise die Antriebsdrehmomente zumindest der beiden angetriebenen Räder wechselweise.

Die Ermittlung des Reibbeiwertes zwischen Rad und Fahrbahn bei Erreichen der Haftungsgrenze hängt nicht nur von dem für diesen Betriebszustand aufzubringenden Antriebsdrehmoment ab, sondern auch von der normal zur Fahrbahn wirkenden Radlast. Diese kann zwar in erster Näherung zumindest für einen nicht beschleunigenden Fahrzustand als konstante Größe angenommen werden. Zur Erhöhung der Genauigkeit der Reibbeiwertbestimmung ist jedoch bevorzugt vorgesehen, daß die Anordnung Radlasterfassungsmittel umfaßt, die die Größe der momentanen auf das schlupfende Rad normal zur Fahrbahn wirkenden Radlast erfassen. Die Radlast kann beispielsweise mit Hilfe von Kraftsensoren am Fahrwerk des Kraftfahrzeuges gemessen werden oder aus sonstigen Systemen der Fahrwerksregelung, beispielsweise einer Dämpfungsregelung übernommen werden. die Radlast läßt sich aber auch aus Informationen über den Fahrzustand berechnen, beispielsweise aus Informationen über den Lenkwinkel als Maß für einen Kurvenradius und/oder aus Informationen über die Fahrzeugbeschleunigung bzw. den Wankwinkel unter Einbeziehung der die Fahrzeugträgheit charakterisierenden Größen, wie beispielsweise dessen Masse, dessen Wankträgheitsmonent oder dessen Nickträgheitsmoment.

Die Aktualisierung der Information über den Reibbeiwert bzw. das kritische Antriebsdrehmoment kann periodisch in vorgegebenen Zeitintervallen erfolgen, beispielsweise alle 10 Sekunden oder einmal pro Minute. Die Aktualisierung kann aber auch situationsabhängig durchgeführt werden, zweckmässigerweise so, daß eine Steuerung während des Fahrbetriebes zeitlich versetzt an angetriebenen Rädern sowohl einer Vorderachse als auch einer Hinterachse des Kraftfahrzeuges auftretende Schlupfänderungen erfaßt und daraufhin eine Aktualisierung der das kritische Antriebsdrehmoment bzw. den Reibbeiwert repräsentierenden Information veranlaßt. Bei dieser Variante wird ausgenutzt, daß sich auch im normalen Fahrbetrieb der Wert des Radschlupfes an Vorderachse und Hinterachse nacheinander um einen gewissen Wert ändert, wenn das Fahrzeug von einer Fahrbahn mit zum Beispiel hohem Reibbeiwert auf eine Fahrbahn mit niedrigerem Reibbeiwert wechselt. Der Schlupf wird sich in aller Regel nicht soweit ändern, daß die Grenzhaftung der Räder erreicht wird, doch genügt die Schlupfänderung zum Auslösen der Aktualisierung der Reibbeiwertinformation, insbesondere, da sie in einer vorbestimmten Reihenfolge an den Rädern auftritt, d. h. zuerst an der Vorderachse und dann an der Hinterachse bzw. bei Rückwärtsfahrt in umgekehrter Reihenfolge.

Als besonders zweckmäßig erweist sich die Erfindung in Kraftfahrzeugen, bei welchen die einzelnen Elektromotoren, die jeweils mit einem einzelnen Antriebsrad gekoppelt sind, aus einer von einer Brennkraftmaschine angetriebenen Generatoranordnung über eine Leistungselektronik mit elektrischem Strom gespeist werden. Bei einer solchen Antriebsanordnung kann die Rechenschaltung die Größe des Antriebsdrehmomentes abhängig von der Größe des dem Elektromotor des schlupfenden Rades zugeführten elektrischen Leistung und der Drehzahl dieses Rades errechnen. Für die Drehmomenterfassung können damit ohnehin zur Verfügung stehende Signale ausgenutzt werden. Ein Beispiel einer solchen Antriebsanordnung für ein Kraftfahrzeug mit einzeln durch Elektromotoren angetriebenen Rädern ist beispielsweise in der DE 4011291 A1 beschrieben. Bei den Elektromotoren handelt es sich dabei um elektronisch kommutierte Vielpolmaschinen, deren Rotor aus einer Vielzahl von Permanentmagneten abwechselnder Polung gebildet ist.

Für die stellungsgerechte Stromzuführung zu den einzelnen Ständerwicklungen sind diese Elektromotoren mit Einrichtungen zur hochgenauen Ermittlung der jeweiligen Relativstellung zwischen Rotor und Ständer ausgestattet und verfügen somit bereits von vornherein im Betrieb über Informationen, aus denen sich die aktuelle Drehzahl und deren Änderung bereits nach einem Bruchteil einer Umdrehung unter Berücksichtigung der Zeit sehr genau bestimmen lassen. Es bedarf hierzu also keiner aufwendigen zusätzlichen Einrichtung mehr.

Da die tatsächlichen Drehzahlunterschiede zwischen zwei auf verschiedenen Längsseiten des Kraftfahrzeuges angeordneten Rädern bei einer Kurvenfahrt die Information über einen vorhandenen Schlupf verfälschen würden, weil allein schon die Kurvengeometrie ohne vorhandenen Schlupf einen Drehzahlunterschied erfordert, wird zweckmässig eine Sensoreinrichtung (z. B. Lenkradwinkelaufnehmer) vorgesehen, die eine solche Kurvenfahrt erfaßt. Diese Sensoreinrichtung kann die Rechenschaltung veranlassen, daß die Bestimmung des kritischen Antriebsdrehmomentes nur bei Geradeausfahrt durchgeführt wird oder daß eine Fehlerkompensation aufgrund der unterschiedlichen Krümmungsradien der Spur der jeweiligen Räder erfolgt. Es kann aber auch veranlaßt werden, daß der Drehzahlvergleich nur zwischen Rädern derselben Längsseite des Kraftfahrzeuges vorgenommen wird, soweit für diese ein etwa gleicher Kurvenradius erwartet werden darf.

Im folgenden soll die Erfindung anhand einer Zeichnung näher erläutert werden. Hierbei zeigt:

Fig. 1      eine schematische Darstellung einer Antriebsanordnung für ein Kraftfahrzeug mit einer Anordnung zur Ermittlung einer den Reibbeiwert bei der Radhaftungsgrenze repräsentierenden Information und

Fig. 2 und 3      Diagramme zur Erläuterung des bei der Ermittlung der Reibbeiwertinformation benutzten Prinzips.

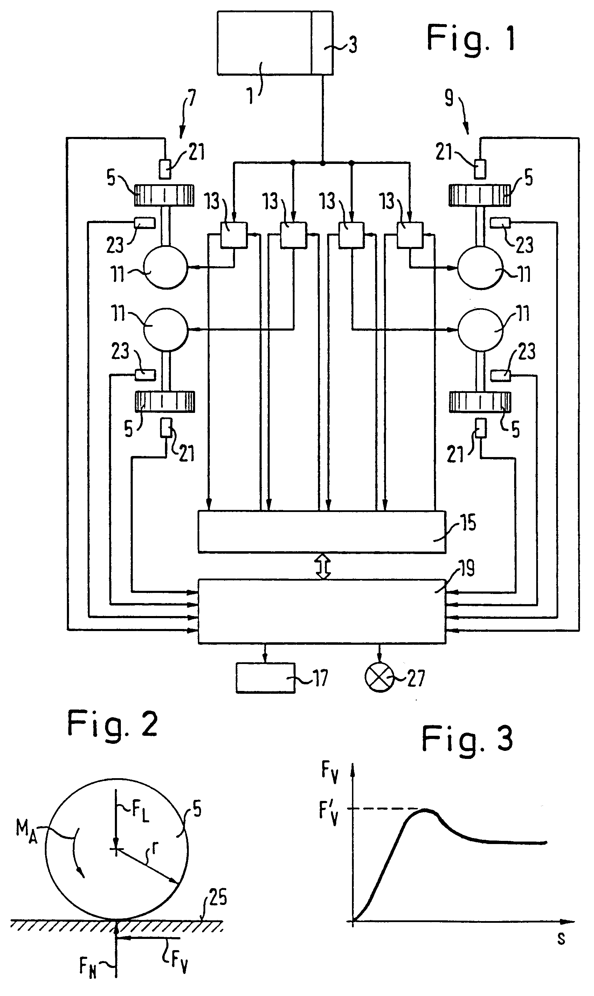

Fig. 1 zeigt eine Brennkraftmaschine 1 eines Kraftfahrzeugs, an die eine Generatoranordnung 3 angeflanscht ist. Sämtliche Räder 5 des Kraftfahrzeugs sowohl an dessen Vorderachse 7 als auch an dessen Hinterachse 9 werden gesondert durch Elektromotoren 11

angetrieben, von denen jeder über eine Stromsteuerschaltung 13 aus der Generatoranordnung 3 gespeist wird. Eine Steuerung 15 steuert die Stromsteuerschaltungen 13 beispielsweise abhängig von der Einstellung eines Fahrpedals so, daß sich an den Rädern 5 ein gewünschtes Antriebsdrehmoment einstellt. Abhängig von dem gewünschten Antriebsdrehmoment wird in nicht näher dargestellter Weise auch die Leistung der Generatoranordnung 3 und der Brennkraftmaschine 1 gesteuert.

Der Antriebsanordnung sind bei 17 angedeutete Regelsysteme für eine Antiblockierregelung (ABS) der Fahrzeugbremsen und/oder eine den Antriebsradschlupf begrenzende Antriebsschlupfregelung (ASR) zugeordnet. Um das Regelverhalten dieser Regelsysteme dem momentanen Fahrbahnzustand besser anpassen zu können, wird den Regelsystemen aus einer Rechenschaltung 19 eine Information über den Reibbeiwert der momentan befahrenen Fahrbahn zugeführt. Die Rechenschaltung 19, bei der es sich um einen Mikroprozessor oder dergleichen handeln kann und die Bestandteil der Steuerung 15 sein kann, erhält aus der Steuerung 15 Informationen über die momentane elektrische Leistung der einzelnen Elektromotoren 11 auf der Grundlage des Produkts aus momentaner Motorspannung und momentanem Motorstrom. Die Rechenschaltung 19 erhält ferner aus Sensoren 21 Informationen, die die momentane Raddrehzahl repräsentieren, und aus Sensoren 23 Informationen über die momentane Radlast normal zur Fahrbahn. Die Rechenschaltung 19 errechnet das Antriebsmoment des Rads 5 durch Division der elektrischen Leistung seines Elektromotors 11 durch die Raddrehzahl und bildet das Verhältnis aus Antriebsmoment dividiert durch die Radlast. Dieses Verhältnis repräsentiert ein Maß für den Reibbeiwert an der Radhaftgrenze, wenn es für die bei Annäherung an die Haftgrenze ermittelten Werte des Drehmoments und der Radlast gebildet wird.

Fig. 2 zeigt die Kraft- und Drehmomentverhältnisse eines angetriebenen Rads 5, welches auf einer Fahrbahn 25 abrollt, wobei

$M_A$      das Antriebsmoment des Elektromotors 11,
$F_L$      die Radlast senkrecht zur Fahrbahn 25,
$F_N$      die Normalkraft an der Auflagestelle des Rads 5 auf der Fahrbahn,
$F_V$      die Vortriebskraft des Rads 5 und
r      der dynamische Reifenradius ist.

Der Radschlupf s ist gleich dem Quotienten aus der Differenz zwischen dem tatsächlich von dem Rad 5 zurückgelegten Weg und dem durch die Umfangslänge des Rades 5 bestimmten, theoretisch zurückgelegten Weg dividiert durch den theoretisch zurückgelegten Weg. Die Vortriebskraft $F_V$ ist bei geringer Vortriebskraft im wesentlichen proportional zum Radschlupf s. Bei Erreichen einer Grenzvortriebskraft $F'_V$ erhöht sich jedoch der Schlupf unter Durchdrehen des Rads 5 sehr stark, wie Fig. 3 zeigt. Der Reibbeiwert µ läßt sich für die Grenzvortriebskraft $F'_V$ aufgrund folgender Beziehungen errechnen. Solange das Rad 5 auf der Straße haftet, gilt

$$F_V < \mu \cdot F_N \qquad (1)$$

Wird das Antriebsdrehmoment des Rads 5 jedoch auf einen Wert erhöht, bei dem das Rad durchzurutschen beginnt, also die Grenzvortriebskraft $F'_V$ erreicht wird, gilt

$$F'_V = \mu \cdot F_N \qquad (2)$$

Unter der Voraussetzung, daß die Radlast $F_L$ gleich der Normalkraft $F_N$ ist, ergibt sich aus der Beziehung (2) und

$$F_V = M_A/r \qquad (3)$$

folgender Zusammenhang für den bei Erreichen der Radhaftungsgrenze geltenden Reibbeiwert $\mu$:

$$\mu = \frac{M_A/r}{F_L} \qquad (4)$$

Zur Bestimmung des Reibbeiwerts $\mu$ sorgt die Rechenschaltung 19 über die Steuerung 15 für eine Umverteilung der Antriebsmomente zwischen den Rädern 5 der Vorderachse 7 und der Hinterachse 9. Die Antriebsmomente werden so umverteilt, daß die Summe der Antriebsmomente sämtlicher Räder 5 konstant bleibt, um Komforteinbußen zu vermeiden. Die Steuerung 15 erhöht abwechselnd an der Vorderachse 7 und an der Hinterachse 9 das Antriebsmoment so lange, bis die Rechenschaltung 19 aufgrund der aus den Sensoren 21 zugeführten Drehzahlinformationen ein Anstieg des Radschlupfs an den Rädern 5 mit erhöhtem Antriebsmoment feststellt. Die Rechenschaltung 19 überwacht hierbei, ob der Radschlupf einen vorgegebenen Schlupfgrenzwert übersteigt. Bei Erfassen des über den Schlupfgrenzwert hinaus erhöhten Radschlupfs wird das momentane Antriebsmoment $M_A$ sowie die momentane Radlast $F_L$ erfaßt und der Reibbeiwert $\mu$ ausgehend von diesen Größen errechnet.

Die Rechenschaltung 19 liefert die Information über den Reibbeiwert nicht nur an die ABS- und/oder ASR-Regelsysteme 17, sondern informiert über ein bei 27 angedeutetes Display auch den Fahrer über den Fahrbahnzustand.

Die Rechenschaltung 19 veranlaßt die Aktualisierung der Reibbeiwertinformation periodisch sich wiederholend, beispielsweise in Intervallen von etwa 10 Sekunden oder einer Minute. Darüber hinaus werden die Drehzahlinformationen der Sensoren 21 aber auch daraufhin überwacht, ob während der Fahrt aufeinanderfolgend Schlupfänderungen zunächst an der Vorderachse 7 und daraufhin folgend auch an der Hinterachse 9 auftreten. Aufeinanderfolgende Schlupfänderungen sowohl an der Vorderachse 7 als auch an der Hinterachse 9 werden als plötzliche Änderung der Fahrbahnbeschaffenheit interpretiert, worauf eine Aktualisierung der Reibbeiwertinformation veranlaßt wird.

**Patentansprüche**

1. Anordnung zur Ermittlung einer ein kritisches Drehmoment an einem Antriebsrad (5) eines Kraftfahrzeuges repräsentierenden Information, wobei das Kraftfahrzeug mehrere Antriebsräder (5) aufweist, wobei Drehmomenterfassungsmittel (15,21) eine der Größe des jeweiligen Antriebsdrehmomentes entsprechende Drehmomentinformation ermitteln, wobei ferner Drehzahlerfassungsmittel (21) eine der Größe der jeweiligen Drehzahl des Antriebsrades (5) entsprechende Drehzahlinformation ermitteln und wobei eine Rechenschaltung (19) zur Ermittlung und Ausgabe der kritischen Drehmomentinformation vorgesehen ist,
**dadurch gekennzeichnet,**
daß

   - die Antriebsräder (5) jeweils einzeln von separat durch Drehmomentsteuereinrichtungen (13) ansteuerbaren Elektromotoren (11) angetrieben werden,
   - die Rechenschaltung (19) an mindestens einem Antriebsrad (5) eine kurzzeitige Erhöhung des Antriebsdrehmomentes über das der anderen Antriebsräder (5) hinaus veranlaßt, wobei die Erhöhung einen vorgegebenen Festbetrag oder einen vorgegebenen Prozentsatz des aktuellen Antriebsdrehmomentes dieses Antriebsrad (5) ausmacht,
   - die ermittelten Drehzahlinformationen des Antriebsrades (5) mit dem erhöhten Antriebsdrehmoment und mindestens eines Antriebsrades (5) mit niedrigerem Antriebsdrehmoment in der Rechenschaltung (19) im Sinne einer Schlupferkennung miteinander verglichen werden,
   - die Rechenschaltung (19) bei Feststellung einer eine vorgegebene tolerierbare relative Drehzahldifferenz nicht überschreitenden Drehzahldifferenz entweder ein Signal dafür ausgibt, daß das kurzzeitig erhöhte Antriebsdrehmoment eine unkritische Größe hat, oder veranlaßt, daß die Antriebsdrehmomenterhöhung erneut mit einem größeren Drehmomenterhöhungsbetrag durchgeführt wird, wobei dann bei Erreichen der vorgegebenen tolerierbaren relativen Drehzahldifferenz ein das kritische Drehmoment repräsentierendes Signal ausgegeben wird, und
   - bei Feststellung einer die vorgegebene tolerierbare relative Drehzahldifferenz überschreitenden Drehzahldifferenz (Überschreiten der Radhaftungsgrenze) von der Rechenschaltung (19) im Sinne einer iterativen Annäherung an die tolerierbare relative Drehzahldifferenz durch wiederholte Erhöhungen des Antriebsdrehmomentes um einen zumindest im ersten Schritt kleineren Erhöhungsbetrag das kritische Drehmoment ermittelt und als Signal ausgegeben wird.

2. Anordnung nach Anspruch 1,
**dadurch gekennzeichnet,**
daß die Rechenschaltung (19) über die Drehmomentsteuereinrichtung (13) während der kurzzeitigen Erhöhung des Antriebsdrehmomentes an dem mindestens einen Antriebsrad (5) die Summe aller Antriebsdrehmomente des Kraftfahrzeuges auf einem vorgegebenen Wert hält.

3. Anordnung nach Anspruch 1 oder 2,
**dadurch gekennzeichnet,**
daß die Rechenschaltung (19) über die Drehmomentsteuereinrichtungen (13) das Verhältnis der Summe der Antriebsdrehmomente der angetriebenen Räder (5) einer Vorderachse (7) des Kraftfahrzeuges zur Summe der Antriebsdrehmomente der angetriebenen Räder (5) einer Hinterachse (9) variieren.

4. Anordnung nach einem der Ansprüche 1 bis 3,
**dadurch gekennzeichnet,**
daß die Rechenschaltung (19) über die Drehmomentsteuereinrichtungen (13) die Antriebsdrehmomente zumindest der beiden angetriebenen Räder (5) wechselweise erhöhen.

5. Anordnung nach einem der Ansprüche 1 bis 4,
**dadurch gekennzeichnet,**
daß der Erhöhungsbetrag des Antriebsdrehmomentes des mindestens einen Antriebsrades (5) höchstens ein Viertel des aktuellen Antriebsdrehmomentes dieses Antriebsrades (5) beträgt.

6. Anordnung nach einem der Ansprüche 1 bis 5,
**dadurch gekennzeichnet,**
daß die kurzzeitige Erhöhung des Antriebsdrehmomentes auf den Zeitraum von weniger als einer halben, insbesondere weniger als einer Zehntel Radumdrehung beschränkt ist.

7. Anordnung nach einem der Ansprüche 1 bis 6,
**dadurch gekennzeichnet,**
daß die tolerierbare relative Drehzahldifferenz im Bereich 10 bis 15 % liegt.

8. Anordnung nach einem der Ansprüche 1 bis 7,
**dadurch gekennzeichnet,**
daß Radlasterfassungsmittel (23) vorgesehen sind, die die Größe der momentanen, auf das Antriebsrad (5) mit dem kurzzeitig erhöhten Antriebsdrehmoment wirkenden Radlast erfassen, und daß die Rechenschaltung (19) anhand der Radlast und des erfaßten kritischen Antriebsdrehmomentes dieses Antriebsrades (5) eine den Reibbeivwert zwischen Fahrbahn und Antriebsrad (5) repräsentierende Information ermittelt.

9. Anordnung nach einem der Ansprüche 1 bis 8,
**dadurch gekennzeichnet,**
daß die Rechenschaltung (19) eine Warneinrichtung (27), insbesondere ein Display zur Anzeige mehrerer unterschiedlicher Fahrbahnzustände steuert.

10. Anordnung nach einem der Ansprüche 1 bis 9,
**dadurch gekennzeichnet,**
daß die Rechenschaltung (19) Regeleinrichtungen (17) eines Antiblockierregelsystems (ABS) und/oder eines Antriebsschlupfregelsystems (ASR) steuert.

11. Anordnung nach einem der Ansprüche 1 bis 10,
**dadurch gekennzeichnet,**
daß die Rechenschaltung (19) die Prozedur zur Ermittlung des kritischen Antriebsdrehmomentes in vorbestimmten Zeitabständen wiederholt.

12. Anordnung nach einem der Ansprüche 1 bis 11,
**dadurch gekennzeichnet,**
daß die Rechenschaltung (19) während des Fahrbetriebes aufgrund der Überwachung der Drehzahlen aller Antriebsräder (5) plötzlich auftretende Schlupfänderungen an den Antriebsrädern (5) einer Vorderachse (7) und zeitlich versetzt dazu auch an den Antriebsrädern (5) einer Hinterachse (9) des Kraftfahrzeuges erkennt und daraufhin die Durchführung der Prozedur zur Ermittlung des kritischen Antriebsdrehmomentes veranlaßt.

13. Anordnung nach einem der Ansprüche 1 bis 12,
**dadurch gekennzeichnet,**
daß die Drehzahlermittlungseinrichtung (21) Bestandteil der als permanent erregte Vielpolmotoren mit elektronischer Kommutierung ausgebildeten Elektromotoren (11) sind und daß die Drehmomentermittlung rechnerisch anhand der dem Elektromotor (11) des Antriebsrades (5) mit dem erhöhten Antriebsdrehmoment zugeführten elektrischen Leistung und der Drehzahl dieses Antriebsrades (5) erfolgt.

14. Anordnung nach einem der Ansprüche 1 bis 13,
**dadurch gekennzeichnet,**
daß zur Ermittlung der relativen Drehzahldifferenz die Drehzahlen von zwei Antriebsrädern (5) herangezogen werden, die auf derselben Längsseite des Kraftfahrzeuges angeordnet sind.

15. Anordnung nach einem der Ansprüche 1 bis 14,
**dadurch gekennzeichnet,**
daß eine Sensoreinrichtung zur Ermittlung einer Kurvenfahrt des Kraftfahrzeuges vorgesehen ist und die Rechenschaltung (19) anhand der übermittelten Daten über die Kurvenfahrt bei der Ermittlung der relativen Drehzahldifferenz den Fehlereinfluß unterschiedlicher Krümmungsradien der Spuren der zu vergleichenden Antriebsräder (5) kompensiert.

16. Anordnung nach einem der Ansprüche 1 bis 14, **dadurch gekennzeichnet,** daß eine Sensoreinrichtung zur Ermittlung einer Kurvenfahrt des Kraftfahrzeuges vorgesehen ist, die im Falle einer Kurvenfahrt die Durchführung der Prozedur zur Ermittlung des kritischen Antriebsdrehmomentes verhindert.

**Claims**

1. An arrangement for determining a parameter representing a critical torque at a driving wheel (5) of a motor vehicle, wherein the motor vehicle has a plurality of driving wheels (5), wherein torque detecting means (15,21) determine a torque parameter corresponding to the magnitude of the respective drive torque, wherein in addition rotational speed detecting means (21) determine a rotational speed parameter corresponding to the magnitude of the respective rotational speed of the driving wheel (5), and wherein a computational circuit (19) is provided for determining and outputting the critical torque information, characterised in that,

   - the driving wheels (5) are each driven individually by electric motors (11) which can be operated separately by torque controllers (13),
   - the computational circuit (19) causes a transient increase in the drive torque, at at least one driving wheel (5), over that of the other driving wheels (5), wherein the increase is a predetermined fixed amount or a predetermined percentage of the current drive torque of this driving wheel (5),
   - the rotational speed parameters which are determined of the driving wheel (5) with the increased drive torque and of at least one driving wheel (5) with a lower drive torque are compared with each other in the computational circuit (19) in the sense of identifying slip,
   - when the computational circuit (19) ascertains a rotational speed difference which does not exceed a predetermined, tolerable relative rotational speed difference it either emits a signal indicating that the transiently increased drive torque is of an uncritical magnitude, or causes the increase in drive torque to be made again with a greater amount of torque increase, wherein when the predetermined tolerable relative rotational speed difference is reached a signal representing the critical torque is then emitted,

and

   - when a rotational speed difference exceeding the predetermined tolerable rotational speed difference (in excess of the wheel adhesion limit) is ascertained by the computational circuit (19) in the sense of an iterative approximation to the tolerable relative rotational speed difference by repeated increases of the drive torque by an amount of increase which is less in the first step at least, the critical torque is determined and output as a signal.

2. An arrangement according to claim 1, characterised in that during the transient increase of the drive torque at the at least one driving wheel (5), the computational circuit (19) maintains the sum of all the drive torques of the motor vehicle at a predetermined value via the torque controller (13).

3. An arrangement according to claim 1 or 2, characterised in that the computational circuit (19), via the torque controllers (13), varies the ratio of the sum of the drive torques of the driven wheels (5) of a front axle (7) of the motor vehicle to the sum of the drive torques of the driven wheels (5) of a rear axle (9).

4. An arrangement according to any one of claims 1 to 3, characterised in that the computational circuit (19), via the torque controllers (13), increases the drive torques of at least the two driven wheels (5) alternately.

5. An arrangement according to any one of claims 1 to 4, characterised in that the amount of increase of the drive torque of the at least one driving wheel (5) is at most a quarter of the current drive torque of this driving wheel (5).

6. An arrangement according to any one of claims 1 to 5, characterised in that the transient increase in drive torque is limited to a period of less than half, particularly less than one tenth, of a wheel revolution.

7. An arrangement according to any one of claims 1 to 6, characterised in that the tolerable relative rotational speed difference falls within the range 10 to 15 %.

8. An arrangement according to any one of claims 1 to 7, characterised in that

wheel load detecting means (23) are provided, which determine the magnitude of the instantaneous wheel load acting on the driving wheel (5) with the transiently increased drive torque, and that the computational circuit (19) determines a parameter representing the coefficient of friction between the roadway and the driving wheel (5) from the wheel load and the critical drive torque of this driving wheel (5) which is determined.

9. An arrangement according to any one of claims 1 to 8,
characterised in that
the computational circuit (19) controls a warning device (27), particularly a display for indicating a plurality of different roadway conditions.

10. An arrangement according to any one of claims 1 to 9,
characterised in that
the computational circuit (19) controls controllers (17) of an anti-lock control system (ABS) and/or of an anti-slip control system (ASR).

11. An arrangement according to any one of claims 1 to 10,
characterised in that
the computational circuit (19) repeats the procedure for determining the critical drive torque at predetermined time intervals.

12. An arrangement according to any one of claims 1 to 11,
characterised in that
during driving operation the computational circuit (19) identifies suddenly occurring changes in slip at the driving wheels (5) of a front axle (7), and also, chronologically displaced in relation thereto, at the driving wheels (5) of a rear axle (9) of the motor vehicle, based on the monitoring of the rotational speeds of all the driving wheels (5), and thereupon causes the procedure for determining the critical drive torque to be carried out.

13. An arrangement according to any one of claims 1 to 12,
characterised in that
the rotational speed determining device (21) is a component of the electric motors (11) constructed as permanently energised multi-pole motors with electronic commutation, and that the determination of the torque is effected by computer from the electrical power supplied to the electric motor (11) of the driving wheel (5) with the increased drive torque and the rotational speed of this driving wheel (5).

14. An arrangement according to any one of claims 1 to 13,
characterised in that

the rotational speeds of two driving wheels (5) which are disposed on the same longitudinal side of the motor vehicle are employed for determining the relative rotational speed difference.

15. An arrangement according to any one of claims 1 to 14,
characterised in that
a sensor device is provided for determining when the motor vehicle is cornering, and when determining the relative rotational speed difference the computational circuit (19) compensates for the erroneous influence of different radii of curvature of the tracks of the driving wheels (5) to be compared, from the data relating to cornering which are determined.

16. An arrangement according to any one of claims 1 to 14,
characterised in that
a sensor device is provided for determining cornering of the motor vehicle, which sensor device prevents the procedure for determining the critical drive torque from being carried out when cornering.

## Revendications

1. Dispositif pour déterminer une information représentant un couple critique sur une roue d'entraînement (5) d'un véhicule automobile, le véhicule automobile comportant plusieurs roues d'entraînement (5), des moyens de détection de couple (15,21) déterminant une information de couple correspondant à la valeur du couple d'entraînement respectif, des moyens de détection de vitesse de rotation (21) déterminant de plus une information de vitesse de rotation correspondant à la valeur de la vitesse de rotation respective de la roue d'entraînement (5), et un circuit de calcul (19) étant prévu pour déterminer et fournir l'information de couple critique,
caractérisé en ce que :

- les roues d'entraînement (5) sont entraînées, à chaque fois, individuellement par des moteurs électriques (11) pouvant être excités séparément par des dispositifs de commande de couple (13),
- le circuit de calcul (19) provoque, sur au moins une roue d'entraînement (5), une augmentation temporaire du couple d'entraînement au-delà de celui des autres roues d'entraînement (5), l'augmentation constituant une valeur fixe prédéfinie ou un pourcentage prédéfini du couple d'entraînement actuel de cette roue d'entraînement (5),
- les informations déterminées de vitesse de rotation de la roue d'entraînement (5) ayant le couple d'entraînement augmenté et d'au moins une roue d'entraînement (5) ayant un couple d'entraînement plus faible étant comparées ensemble dans le circuit de calcul (19) dans le sens d'une reconnaissance de patinage,

- le circuit de calcul (19), lors de la détermination d'une différence de vitesses de rotation ne dépassant pas une différence de vitesses de rotation relative tolérable prédéfinie, soit fournit un signal indiquant que le couple d'entraînement temporairement augmenté présente une valeur non critique, soit entraîne que l'augmentation du couple d'entraînement est à nouveau effectuée avec une plus grande valeur de l'augmentation du couple, un signal représentant le couple critique étant alors fourni lorsque la différence de vitesses de rotation relative tolérable prédéfinie est atteinte, et

- lors de la détermination d'une différence de vitesses de rotation dépassant la différence de vitesses de rotation relative tolérable prédéfinie (dépassement de la limite d'adhérence des roues) par le circuit de calcul (19) dans le sens d'une approche itérative de la différence de vitesses de rotation relative tolérable par augmentations répétées du couple d'entraînement d'une valeur d'augmentation plus petite au moins dans la première étape, le couple critique est détecté et fourni comme signal.

2. Dispositif selon la revendication 1, caractérisé en ce que le circuit de calcul (19) maintient, par l'intermédiaire du dispositif de commande de couple (13), pendant l'augmentation temporaire du couple d'entraînement sur au moins une roue d'entraînement (5), la somme de tous les couples d'entraînement du véhicule à une valeur prédéfinie.

3. Dispositif selon la revendication 1 ou 2, caractérisé en ce que le circuit de calcul (19), par l'intermédiaire des dispositifs de commande de couple (13), fait varier le rapport de la somme des couples d'entraînement des roues entraînées (5) d'un essieu avant (7) du véhicule automobile par rapport à la somme des couples d'entraînement des roues entraînées (5) d'un essieu arrière (9).

4. Dispositif selon une des revendications 1 à 3, caractérisé en ce que le circuit de calcul (19), par l'intermédiaire des dispositifs de commande de couple (13), augmente alternativement les couples d'entraînement d'au moins les deux roues entraînées (5).

5. Dispositif selon une des revendications 1 à 4, caractérisé en ce que la valeur d'augmentation du couple d'entraînement d'au moins une roue d'entraînement (5) vaut au plus un quart du couple d'entraînement actuel de cette roue d'entraînement (5).

6. Dispositif selon une des revendications 1 à 5, caractérisé en ce que l'augmentation temporaire du couple d'entraînement est limitée à l'intervalle de temps de moins d'un demi-tour de roue, en particulier moins d'un dixième de tour.

7. Dispositif selon une des revendications 1 à 6, caractérisé en ce que la différence de vitesses de rotation relative tolérable est dans la plage de 10 à 15%.

8. Dispositif selon une des revendications 1 à 7, caractérisé en ce que des moyens de détection de charge de roue (23) sont prévus, qui détectent la valeur de la charge de roue instantanée agissant sur la roue d'entraînement (5) ayant le couple d'entraînement temporairement augmenté, et en ce que le circuit de calcul (19) détermine, en référence à la charge de roue et au couple d'entraînement critique détecté de cette roue d'entraînement (5), une information représentant le coefficient de frottement entre la voie de roulement et la roue d'entraînement (5).

9. Dispositif selon une des revendications 1 à 8, caractérisé en ce que le circuit de calcul (19) commande un dispositif d'alarme (27), en particulier un affichage pour afficher plusieurs états différents de la voie de roulement.

10. Dispositif selon une des revendications 1 à 9, caractérisé en ce que le circuit de calcul (19) commande des dispositifs de réglage (17) d'un système de régulation d'anti-blocage (ABS) et/ou d'un système de régulation de patinage (ASR).

11. Dispositif selon une des revendications 1 à 10, caractérisé en ce que le circuit de calcul (19) répète la procédure pour détecter le couple d'entraînement critique à des intervalles de temps prédéfinis.

12. Dispositif selon une des revendications 1 à 11, caractérisé en ce que le circuit de calcul (19) pendant la marche reconnaît, en raison de la surveillance des vitesses de rotation de toutes les roues d'entraînement (5), des modifications soudaines du patinage sur les roues d'entraînement (5) d'un essieu avant (7) et, de façon décalée dans le temps par rapport à cela, également sur les roues d'entraînement (5) d'un essieu arrière (9) du véhicule automobile et, en conséquence, entraîne la réalisation de la procédure pour détecter le couple d'entraînement critique.

13. Dispositif selon une des revendications 1 à 12, caractérisé en ce que le dispositif de détection de la vitesse de rotation (21) fait partie des moteurs électriques (11) réalisés en tant que moteurs multipolaires excités de façon permanente à commutation électronique, et en ce que la détection du couple est effectuée par calcul en référence à la puissance électrique amenée au moteur électrique (11) de la roue d'entraînement (5) ayant le couple d'entraînement augmenté et à la vitesse de rotation de cette roue d'entraînement (5).

14. Dispositif selon une des revendications 1 à 13, caractérisé en ce que, pour détecter la différence de vitesses de rotation relative, les vitesses de rotation de deux roues d'entraînement (5), qui sont agencées du même côté latéral du véhicule automobile, sont utilisées.

15. Dispositif selon une des revendications 1 à 14, caractérisé en ce qu'un dispositif de capteur est prévu pour détecter un virage du véhicule automobile, et le circuit de calcul (19) compense, en référence aux données transmises dans le virage lors de la détection de la différence de vitesses de rotation relative, l'influence d'erreur de différents rayons de courbure des trajectoires des roues d'entraînement (5) à comparer.

16. Dispositif selon une des revendications 1 à 14, caractérisé en ce qu'un dispositif de capteur est prévu pour déterter un virage du véhicule automobile, qui, dans le cas d'un virage, empêche la mise en oeuvre de la procédure pour déterminer le couple d'entraînement critique.

# Fig. 1

# Fig. 2

# Fig. 3